# EUROPÄISCHE PATENTSCHRIFT

(11) **EP 0 263 282 B1**
(45) Veröffentlichungstag und Bekanntmachung des Hinweises auf die Patenterteilung: **28.07.1993**
(21) Anmeldenummer: 87112221.4
(22) Anmeldetag: 22.08.1987
(51) Int. Cl.: H04Q 1/44, H04L 27/26, H04M 7/00

(54) **Signalisierungsempfänger**
Signalling receiver
Récepteur de signalisation

(30) Priorität: 03.09.1986 DE 3629907
(43) Veröffentlichungstag der Anmeldung: 13.04.1988
(73) Patentinhaber: Alcatel SEL Aktiengesellschaft, D-70435 Stuttgart (DE); ALCATEL N.V., NL-1077 XX Amsterdam (NL)
(72) Erfinder: Meschkat, Peter, D-7050 Waiblingen (DE); Grafl, Katalin, D-7000 Stutgart 1 (DE)
(74) Vertreter: Gähr, Hans-Dieter, Dipl.-Ing. (FH)

(56) Entgegenhaltungen:
- EP-A- 0 144 794
- EP-A- 0 185 295
- US-A- 4 097 812

## Beschreibung

Die Erfindung betrifft einen Signalisierungsempfänger, der einen an eine Amtsleitung in einem Amtsverbindungssatz einer Fernsprechanlage angeschlossenen Signaleingang enthält, und der ein mit einer Taktleitung verbundenes, variables Bandpaßfilter aufweist, dessen Bandmittenfrequenz mit einem Taktsignal entsprechender Frequenz eingestellt wird.

Ein solcher Signalisierungsempfänger ist bekannt (DE-A-33 43 646 & EP-A-01 44 794). Ein zum Ausfiltern der zu empfangenden Signalfrequenz eingesetztes Bandpaßfilter wird dabei mit Hilfe eines sogenannten Schalter-Kondensator-Filters realisiert. Somit ist es möglich mit einem einzigen Filter sämtliche zu empfangende Signalfrequenzen zu detektieren. Dazu wird die Bandmittenfrequenz jeweils durch eine über eine Taktleitung anliegende entsprechende Taktfrequenz eingestellt.

Es ist bereits ein als Bandpaß wirkender Schaltkreis bekannt (US-A-4,097,812), dessen untere und obere Eckfrequenzen jeweils mittels zweier Impulsdetektoren einstellbar sind. Jeder Detektor enthält eine eigene Taktversorgung, die einen digitalen Zähler des Detektors steuert. Zur groben Vorselektion der für die Funktion eines Systems notwendigen Frequenzen , in dem der Bandpaß eingesetzt wird, wird ein Hochpaßfilter dem Bandpaßfilter vorgeschaltet. Außerdem ist noch eine ein Recktecksignal bildende Einheit zwischen Hochpaßfilter und Bandpaßfilter vorgesehen. Falls mehrere Frequenzbereiche zu detektieren sind, kann aus jeweils zwei Detektoren eine Eckfrequenz vorgegeben werden, wobei den gesamten so gebildeten Bandpäßen dann ein Hochpaß zur Vorselektion vorgeschaltet wird.

Die technische Aufgabe gemäß der Erfindung besteht darin, Wechselspannungssignale unterschiedlicher Frequenz auf Amtsleitungen unter allen Betriebsbedingungen sicher zu empfangen.

Diese Aufgabe wird erfindungsgemäß durch die technische Lehre des Patentanspruchs 1 gelöst.

Ein Vorteil der Erfindung liegt insbesondere darin, daß aufgrund des mit gleicher Taktfrequenz wie das Bandpaßfilter eingestellten Hochpaßfilters alle Störspannungen mit Frequenzen unterhalb des zu empfangenden Wechselspannungssignals ausgefiltert werden. Außerdem filtert das Hochpaßfilter bei zu empfangenden 16 KHz Gebührenimpulsen das gleichzeitig anliegende Sprachsignal aus. Weiterhin wird mittels der Signalauswerte- und Umsetzeinheit, unabhängig von Störspannungen und Signalpegeldämpfungen auf der Amtsleitung, immer ein Rechtecksignal konstanter Amplitude und mit der zu empfangenden Signalfrequenz dem Bandpaßfilter bereitsgestellt, so daß immer ein sicherer Empfang gewährleistet wird.

Weitere vorteilhafte Ausgestaltungen gemäß der Erfindung sind den Unteransprüchen zu entnehmen.

Ein Ausführungsbeispiel wird im folgenden anhand der Zeichnungen erläutert.

Es zeigen:
- Figur 1: ein Blockschaltbild des erfindungsgemäßen Signalisierungsempfängers und
- Figur 2: eine Ausfuhrung eines Taktfrequenzdetektors des erfindungsgemäßen Signalisierungsempfängers.

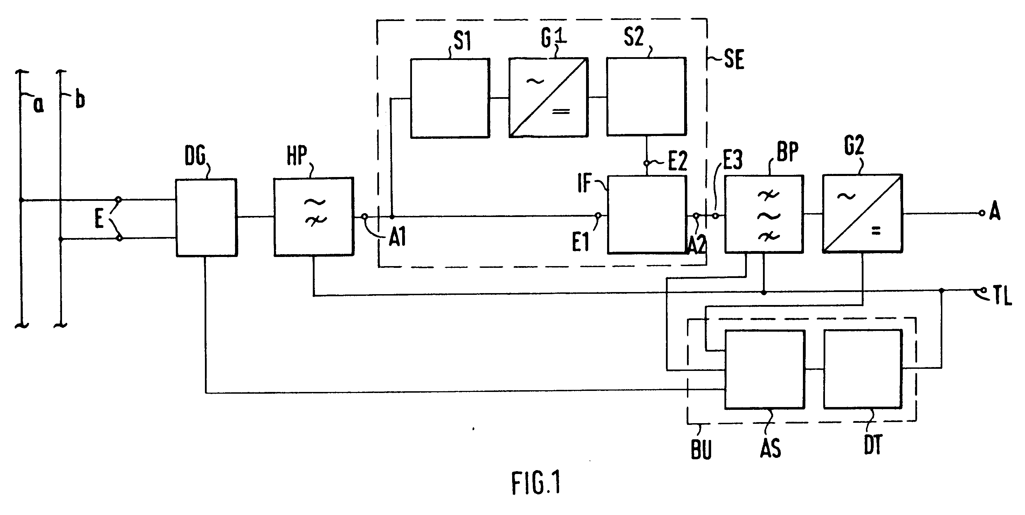

Ein Signalisierungsempfänger, wie in Figur 1 gezeigt, ist mit seinem Signaleingang E an eine Amtsleitung a, b eines Amtsverbindungssatzes angeschlossen. Der Signaleingang E ist über ein Dämpfungsglied DG mit einem variablen Hochpaßfilter HP verbunden und ein Signalausgang A1 des Hochpaßfilters HP ist über eine Signalauswerte-und Umsetzeinheit SE an ein variables Bandpaßfilter BP angeschlossen. Weiterhin sind das Hochpaßfilter HP und das Bandpaßfilter BP mit einer Taktleitung TL verbunden, so daß die Grenzfrequenz bzw. die Bandmittenfrequenz je nach zu empfangender Signalfrequenz mittels eines Taktsignals entsprechender Frequenz einstellbar sind. Aufgrund des gleichen Taktsignales liegt die Grenzfrequenz des Hochpaßfilters HP immer im gleichen relativen Abstand zur Bandmittenfrequenz des Bandpaßfilters BP, wobei die Grenzfrequenz tiefer als die Bandmittenfrequenz des Bandpaßfilters BP liegt. Zum Aufbau solcher variabler Filter werden in vorteilhafter Weise sogenannte Schalter-Kondensator-Filter benutzt.

Die Signalauswerte- und Umsetzeinheit SE besteht, wie Figur 1 zu entnehmen ist, aus einem schaltbaren Impulsformer IF und einer Reihenschaltung aus einem ersten Schwellwertschalter S1, einem ersten Gleichrichter G1 und einem zweiten Schwellwertschalter S2. Dabei ist der Signalausgang A1 des Hochpaßfilters HP einerseits mit einem ersten Eingang E1 des Impulsformers IF und andererseits über die obengenannte Reihenschaltung mit einem zweiten Eingang E2 des Impulsformers IF verbunden. Ein Ausgang A2 des Impulsformers IF ist an einen Signaleingang E3 des variablen Bandpaßfilters BP angeschlossen.

Ferner (vgl. Figur 1) steht ein mit der Taktleitung TL verbundener Bandbreitenumschalter BU mit dem variablen Bandpaßfilter BP und mit dem Dämpfungsglied DG in Verbindung. Der Bandbreitenumschalter BU weist einen mit der Taktleitung TL verbundenen Taktfrequenzdetektor DT und ein Analogschalterfeld AS auf. Das mit dem Taktfrequenzdetektor DT verbundene Analogschalterfeld AS ist an das variable Bandpaßfilter BP und an das Dämpfungsglied DG angeschlossen, wobei in Abhängigkeit der über den Taktfrequenzdetektor DT detektierten Taktfrequenzen Widerstände des Bandpaßfilters BP zum Einstellen entsprechender Bandbreiten bzw. Widerstände des Dämpfungsgliedes DG zum Einstellen entsprechender Dämpfungsfaktoren umschaltbar sind.

Weiterhin ist (vgl. Figur 1) ein Signalausgang des variablen Bandpaßfilters BP mit einem zweiten Gleichrichter G2 verbunden, dessen Signalausgang einen Ausgang A des Signalisierungsempfängers bildet. Der zweite Gleichrichter G2 ist mit dem Analogschalterfeld AS verbunden, so daß entsprechend der über den Taktfrequenzdetektor DT detektierten Taktfrequenzen eine entsprechende Zeitkonstante des zweiten Gleichrichters G2 einstellbar ist.

Im folgenden wird die Funktion des erfindungsgemäßen Signalisierungsempfängers für die zu empfangenden Wechselstromsignale mit Frequenzen von
- 425/450 Hz Wählton/Besetzton für eine abgehende Belegung
- 25/50 Hz Rufton/Auslöseempfang für eine ankommende Belegung und
- 16 KHz für Gebührenimpulse bei abgehender Belegung.

näher erläutert.

Für eine abgehende Belegung d.h. 425/450 Hz wird über die Taktleitung TL eine entsprechende Taktfrequenz an das variable Bandpaßfilter BP und das variable Hochpaßfilter HP angelegt, so daß die Filter auf eine Grenzfrequenz von etwa 350 Hz bzw. auf eine Bandmittenfrequenz von 425/450 Hz eingestellt sind. Dabei ist das Verhältnis von der Taktfrequenz zur zu empfangenden Signalfrequenz d.h. der Bandmittenfrequenz des Bandpaßfilters BP hier zu 50:1 gewählt.

Gleichzeitig liegt über die Taktleitung TL diese Taktfrequenz an dem Taktfrequenzdetektor DT des Bandbreitenumschalters BU an.

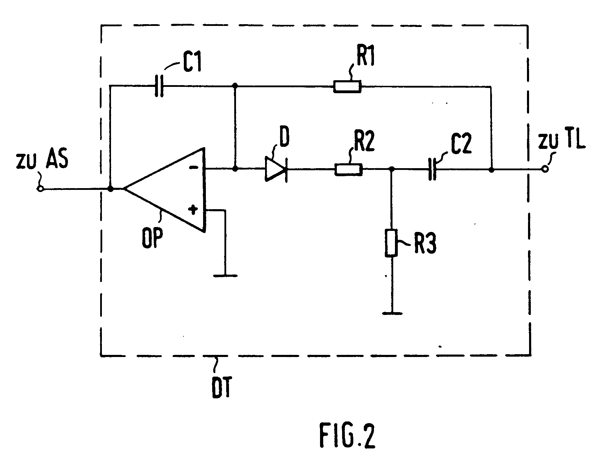

Es wird zunächst auf den genauen Aufbau des Taktfrequenzdetektors DT eingegangen. Wie Figur 2 zu entnehmen ist, weist der Taktfrequenzdetektor DT einen Integrator C1, OP an, wobei dessen Eingang - einerseits über einen ersten Widerstand R1 und andererseits über eine Reihenschaltung aus einer in Durchlaßrichtung gepolten Diode D, einem zweiten Widerstand R2 und einem Differenzierer C2, R3 mit der Taktleitung TL verbunden ist. Dem Integrator C1, OP wird nun über den ersten Widerstand R1 die positive Halbwelle des anliegenden Taktsignals direkt und über den zweiten Widerstand R2 und die Diode D die negative Halbwelle und zwar aufgrund des Differenzierers R3,C2 ein Impuls konstanter Dauer zugeführt. Der erste Widerstand R1 und der zweite Widerstand R2 sind so dimensioniert, daß für vergleichsweise tiefe Taktfrequenzen (zum Einstellen von 25/50 Hz und 425/450 Hz) am Ausgang des Integrators C1, OP eine negative Spannung und für vergleichsweise hohe Taktfrequenzen (zum Einstellen von 16 KHz) eine positive Spannung anliegt.

Im Falle der abgehenden Belegung, d.h. 425/450 Hz liegt eine negative Spannung am Analogschalterfeld AS an, so daß Widerstände des Bandpaßfilters BP durch das Analogschalterfeld AS so umgeschaltet werden, daß eine postalischen Forderungen entsprechende Bandbreite eingestellt wird. Ebenso werden durch das Analogschalterfeld AS Widerstände des Dämpfungsgliedes DG am Signaleingang E des Signalisierungsempfängers so umgeschaltet, daß entsprechend postalischer Forderungen ein bestimmter Dämpfungsfaktor eingestellt wird.

Das über die Amtsleitung a, b am Signaleingang E anliegende zu empfangende Wechselspannungssignal (abgehende Belegung 425/450 Hz) gelangt über das Dämpfungsglied DG zum variablen Hochpaßfilter HP und über den Signalausgang A1 auf den ersten Eingang E1 des Impulsformers IF. Durch das Hochpaßfilter HP werden im wesentlichen Störspannungen mit Frequenzen von 16 2/3 Hz und 50 Hz ausgefiltert.

Der Impulsformer IF ist so dimensioniert, daß bereits kleinste anliegende Signale ausreichend sind, um eine impulsförmige Ausgangsspannung zu erzeugen. Um nun zu vermeiden, daß aufgrund von Störspannungsresten, die durch das Hochpaßfilter HP nicht ausgefiltert wurden, unzulässige Ausgangsspannungen am Impulsformer IF anliegen, wird der Impulsformer IF erst dann über den zweiten Schwellwertschalter S2 aktiviert, wenn das zu empfangende Wechselsspannungssignal einen durch den ersten Schwellwertschalter S1 vorgegebenen, bestimmten Signalpegel überschritten hat. Dabei wird aufgrund eines Ladekondensators des ersten Gleichrichters G1 sichergestellt, daß das zu empfangende Wechselspannungssignal mindestens für eine Signalperiode aufrecht erhalten wird. Dazu ist der Ladekondensator so dimensioniert, daß seine Zeitkonstante der längsten zu empfangenden Signalperiode entspricht.

Wird nun der Impulsformer IF über den zweiten Eingang E2 aktiviert, so liegt an seinem Ausgang A2 ein Rechtecksignal konstanter vom Eingangssignal unabhängiger Amplitude mit der zu empfangenden Signalfrequenz von 425/450 Hz an. Durch das auf die entsprechende Bandmittenfrequenz abgestimmte Bandpaßfilter BP wird somit unabhängig von Störungen und Pegeldämpfungen des Wechselspannungssignals auf der Amtsleitung a, b immer sicher das zu empfangende Wechselspannungssignal ausgefiltert.

Das ausgefilterte Signal gelangt, gemäß einer weiteren vorteilhaften Ausgestaltung der Erfindung, über einen zweiten Gleichrichter G2 auf den Signalausgang A. Der zweite Gleichrichter G2 erleichtert eine anschließende digitale Aufbereitung des ausgefilterten Signales. Dabei ist der zweite Gleichrichter G2 mit dem Analogschalter feld AS des Bandbreitenumschalters BU verbunden, so daß in Abhängigkeit der über den Taktfrequenzdetektor DT detektierten Taktfrequenzen entsprechende Zeitkonstanten am zweiten Gleichrichter G2 einstellbar sind.

Für den Fall einer ankommenden Belegung, d.h. 25/50 Hz Wechselspannungssignale, ergibt sich eine zu dem zuvor Beschriebenen analoge Arbeitsweise des Signalisierungsempfängers. Das Hochpaßfilter HP und das Bandpaßfilter BP werden mit einer entsprechenden tieferen Taktfrequenz angesteuert, so daß eine Grenzfrequenz von 2o/40 Hz eingestellt ist.

Für zu empfangende 16 KHz Gebührenimpulse funktioniert der erfindungsgemäße Signalisierungsempfänger entsprechend. Das Hochpaßfilter HP und das Bandpaßfilter BP werden dazu mit einem entsprechend höheren Taktfrequenz auf eine Grenzfrequenz von etwa 13 KHz bzw. eine Bandmittenfrequenz von 16 KHz eingestellt. Aufgrund der vergleichsweisen hohen Taktfrequenz ergibt sich nun am Ausgang des Taktfrequenzdetektors DT eine positive Ausgangsspannung. Dies bewirkt über das Analogschalterfeld AS eine entsprechende Einstellung des Dämpfungsgliedes DG, da ein minimaler Pegel, nach postalischen Erfordernissen, für ein "Nicht Ansprechen" des Signalisierungsempfängers bei 16 KHz Signalen höher liegt, als der Pegel für "Ansprechen" bei 425/450 Hz Signalen. Außerdem wird über das Analogschalterfeld AS eine kleinere Bandbreite für das Bandpaßfilter BP eingestellt. Da das Hochpaßfilter HP eine Grenzfrequenz von etwa 13 KHz aufweist wird im wesentlichen das gleichzeitig anliegende Sprachsignal und Störsignale aufgrund anliegender Längsstörspannungen ausgefiltert und somit eine Beeinflussung des ersten Schwellwertschafters S1 und des Impulsformers IF verhindert. Weiterhin wird auch die Zeitkonstante des zweiten Gleichrichter G2 entsprechend den zu empfangenden Gebührenimpulsen so eingestellt, daß eine anschliessende digitale Verarbeitung sicher möglich ist.

## Patentansprüche

1. Signalisierungsempfänger, der einen an eine Amtsleitung (a, b) in einem Amtsverbindungssatz einer Fernsprechanlage angeschlossenen Signaleingang (E) enthält, und der ein mit einer Taktleitung (TL) verbundenes, variables Bandpaßfilter (BP) aufweist, dessen Bandmittenfrequenz mit einem Taktsignal entsprechender Frequenz eingestellt wird, **dadurch gekennzeichnet,** daß der Signaleingang (E) über ein variables Dämpfungsglied (DG) mit einem variablen Hochpaßfilter (HP) verbunden ist, daß das Hochpaßfilter (HP) mit der Taktleitung (TL) und über eine Signalauswerte- und Umsetzeinheit (SE) mit dem variablen Bandpaßfilter (BP) verbunden ist, so daß die Grenzfrequenz des Hochpaßfilters (HP) aufgrund des gleichen Taktsignales immer im gleichen relativen Abstand zur Bandmittenfrequenz des Bandpaßfilters (BP) liegt, wobei die Grenzfrequenz tiefer als die Bandmittenfrequenz ist, und daß ein mit der Taktleitung (TL) verbundener Bandbreitenumschalter (BU) mit dem variablen Bandpaßfilter (BP) und dem variablen Dämpfungsglied (DG) verbunden ist, so daß entsprechend der Frequenz des Taktsignales sowohl die Bandbreite als auch die Dämpfung eingestellt wird.

2. Signalisierungsempfänger nach Anspruch 1, dadurch gekennzeichnet, daß die Signalauswerte- und Umsetzeinheit (SE) einen schaltbaren Impulsformer (IF) und eine Reihenschaltung aus einem ersten Schwellwertschalter (S1), einem ersten Gleichrichter (G1) und einem zweiten Schwellwertschalter (S2) aufweist, daß ein Signalausgang (A1) des Hochpaßfilters (HP) einerseits mit einem ersten Eingang (E1) des Impulsformers (IF) und andererseits über die oben genannte Reihenschaltung (S1, G1, S2) mit einem zweiten Eingang (E2) des Impulsformers (IF) verbunden ist und daß ein Ausgang (A2) des Impulsformers (V2), an dem ein Rechtecksignal mit der zu empfangenden Signalfrequenz und mit konstanter Amplitude anliegt, mit einem Signaleingang (E3) des Bandpaßfilters (BP) verbunden ist.

3. Signalisierungsempfänger nach Anspruch 2, dadurch gekennzeichnet, daß der erste Gleichrichter (G1) einen Ladekondensator enthält, dessen Zeitkonstante der längsten zu empfangenden Signalperiode entspricht.

4. Signalisierungsempfänger nach einem der vorhergehenden Ansprüche, dadurch gekennzeichnet, daß der Bandbreitenumschalter (BU) einen mit der Taktleitung (TL) verbundenen Taktfrequenzdetektor (DT) und ein Analogschalterfeld (AS) aufweist und daß das Analogschalterfeld mit dem Dämpfungsglied (DG) und dem Bandpaßfilter (BP) verbunden ist, wobei in Abhängigkeit der über den Taktfrequenzdetektor (DT) detektierten Taktfrequenzen Widerstände des Dämpfungsglieds (DG) zum Einstellen entsprechender Dämpfungsfaktoren bzw. Widerstände des Bandpaßfilters (BP) zum Einstellen entsprechender Bandbreiten umschaltbar sind.

5. Signalisierungsempfänger nach Anspruch 4, dadurch gekennzeichnet, daß der Taktfrequenzdetektor (DT) einen Integrator (C1, OP) aufweist, dessen Eingang einerseits über einen ersten Widerstand (R1) und andererseits über eine Reihenschaltung aus einer in Durchlaßrichtung gepolten Diode (D), einem zweiten Widerstand (R2) und einem Differenzierer (C2, R3) mit der Taktleitung (TL) verbunden ist, wobei am Ausgang des Integrators (C1, OP), entsprechend dem Widerstandsverhältnis der beiden Widerstände (R1, R2), für vergleichsweise tiefe Taktfrequenzen eine negative Ausgangsspannung und für vergleichsweise hohe Taktfrequenzen eine positive Ausgangsspannung anliegt.

6. Signalisierungsempfänger nach Anspruch 4 oder 5, dadurch gekennzeichnet, daß ein Signalausgang des variablen Bandpaßfilters (BP) mit einem zweiten Gleichrichter (G2) verbunden ist und daß der zweite Gleichrichter (G2) mit dem Analogschalterfeld (AS) des Bandbreitenumschalters (BU) in Verbindung steht, so daß in Abhängigkeit der über den Taktfrequenzdetektor (DT) detektierten Taktfrequenzen entsprechende Zeitkonstanten des zweiten Gleichrichters (G2) einstellbar sind.

7. Signalisierungsempfänger nach einem der vorhergehenden Ansprüche, dadurch gekennzeichnet, daß das Hochpaßfilter (HP) und das Bandpaßfilter (BP) als Schalter-Kondensator-Filter ausgebildet sind.

## Claims

1. A signalling receiver which has a signal input (E) connected to a central-office trunk (a, b) in a trunk junctor of a telephone system, and which includes a variable bandpass filter (BP) connected to a clock line (TL), the midfrequency of the variable bandpass filter (BP) being adjusted with a clock signal of a suitable frequency, **characterized in** that the signal input (E) is connected via a variable attenuator (DG) to a variable high-pass filter (HP), that the high-pass filter (HP) is connected to the clock line (TL) and, via a signal evaluation and conversion unit (SE), to the variable bandpass filter (BP), so that, since the high-pass filter (HP) and the bandpass filter (BP) are fed with the same clock signal, the cutoff frequency of the high-pass frequency (HP) is always at the same relative distance from the midband frequency of the bandpass filter (BP), the cutoff frequency being lower than the midband frequency, and that a bandwidth switch (BU) is connected to the clock line (TL), the variable bandpass filter (BP), and the variable attenuator (DG), so that both the bandwidth and the attenuation are adjusted in accordance with the frequency of the clock signal.

2. A signalling receiver as claimed in claim 1, characterized in that the signal evaluation and conversion unit (SE) contains a switchable pulse shaper (IF) and a series combination of a first threshold switch (S1), a first rectifier (G1), and a second threshold switch (S2), that a signal output (A1) of the high-pass filter (HP) is connected, on the one hand, to a first input (E1) of the pulse shaper (IF) and, on the other hand, via said series combination (S1, G1, S2) to a second input (E2) of the pulse shaper (IF), and that an output (A2) of the pulse shaper (IF), which provides a square-wave signal of the frequency to be received and of constant amplitude, is coupled to a signal input (E3) of the bandpass filter (BP).

3. A signalling receiver as claimed in claim 2, characterized in that the first rectifier (G1) contains a charging capacitor having a time constant equal to the longest signal period to be received.

4. A signalling receiver as claimed in any one of the preceding claims, characterized in that the bandwidth switch (BU) contains an analog switch array (AS) and a clock-frequency detector (DT) connected to the clock line (TL), and that the analog switch array is connected to the attenuator (DG) and the bandpass filter (BP), with resistors of the attenuator (DG) and bandpass filter (BP) being switchable in response to the clock frequencies detected by the clock-frequency detector (DT) to adjust corresponding attenuation factors and bandwidths, respectively.

5. A signalling receiver as claimed in claim 4, characterized in that the clock-frequency detector (DT) includes an integrator (C1, OP) having its input connected to the clock line (TL) via a first resistor (R1) on the one hand and via a series combination of a forward-biased diode (D), a second resistor (R2), and a differentiator (C2, R3) on the other, the resistance ratio of the two resistors (R1, R2) being such that a negative voltage is developed at the output of the integrator (C1, OP) for comparatively low clock frequencies, and a positive voltage for comparatively high clock frequencies.

6. A signalling receiver as claimed in claim 4 or 5, characterized in that a signal output of the variable bandpass filter (BP) is connected to a second rectifier (G2), and that the second rectifier (G2) is connected to the analog switch array (AS) of the bandwidth switch (BU), so that time constants of the second rectifier (G2) are adjustable in response to the clock frequencies detected by the clock-frequency detector (DT).

7. A signalling receiver as claimed in any one of the preceding claims, characterized in that the high-pass filter (HP) and the bandpass filter (BP) are switched-capacitor filters.

## Revendications

1. Récepteur de signalisation comportant une entrée de signal (E) raccordée à une ligne d'un autocommutateur d'une installation de télécommunications, ayant un filtre passe-bande (BP) variable relié à une ligne de signal de rythme (TL) dont la fréquence centrale de bande est réglée grâce à un signal de rythme d'une fréquence correspondante, caractérisé en ce que l'entrée de signal (E) est reliée via un élément d'amortissement variable (DG) à un filtre passe-haut variable (HP), en ce que le filtre passe-haut (HP) est relié à la ligne de signal de rythme (TL) et, via une unité d'analyse et de transformation de signal (SE), au filtre passe-bande variable (BP), de sorte que, grâce au signal de rythme identique, le rapport entre la fréquence limite du filtre passe-haut (HP) et la fréquence centrale de bande du filtre passe-bande (BP) reste constant, la fréquence limite étant plus basse que la fréquence centrale de bande, et en ce que un commutateur de largeur de bande (BU) relié à la ligne de signal de rythme (TL) est relié au filtre passe-bande variable (BP) et à l'élément d'amortissement variable (DG), de sorte que, en fonction de la fréquence du signal de rythme, il est possible de réguler en même temps la largeur de bande et l'amortissement.

2. Récepteur de signalisation selon la revendication 1, caractérisé en ce que l'unité d'analyse et de transformation de signal (SE) comprend un générateur d'impulsions commutable (IF) et un circuit série composé d'un premier commutateur à valeur de seuil (S1), d'un premier redresseur (G1) et d'un deuxième commutateur à valeur de seuil (S2), en ce qu'une sortie de signal (A1) du filtre passe-haut (HP) est reliée, d'une part, à une première entrée (E1) du générateur d'impulsions (IF) et, d'autre part, via le circuit série sus-mentionné (S1, G1, S2), à une deuxième entrée (E2) du générateur d'impulsions (IF), et en ce que une sortie (A2) du générateur d'impulsions (V2) sur laquelle est présent un signal rectangulaire à la fréquence du signal à recevoir et une amplitude constante est reliée à une entrée de signal (E3) du filtre passe-bande (BP).

3. Récepteur de signalisation selon la revendication 2, caractérisé en ce que le premier redresseur (G1) comporte un condensateur de charge dont la constante de temps correspond à la plus longue période des signaux à recevoir.

4. Récepteur de signalisation selon l'une des revendications précédentes, caractérisé en ce que le commutateur de largeur de bande (BU) comporte un détecteur de fréquence du signal de rythme (DT) relié à la ligne de rythme (TL) ainsi qu'une matrice de commutateurs analogiques (AS), et en ce que la matrice de commutateurs analogiques est reliée à l'élément d'amortissement (DG) et au filtre passe-bande (BP) de sorte que, en fonction de la fréquence du signal de rythme détectée par le détecteur de fréquence du signal de rythme, des résistances de l'élément d'amortissement (DG) peuvent être commutées afin de réguler des facteurs d'amortissement ou, respectivement, des résistances du filtre passe-bande (BP) afin de réguler des largeurs de bande correspondantes.

5. Récepteur de signalisation selon la revendication 4, caractérisé en ce que le détecteur de fréquence du signal de rythme (DT) comporte un intégrateur (C1, OP) dont l'entrée est reliée, d'une part, via une première résistance (R1) et, d'autre part, via un circuit série composé d'une diode branchée dans son sens de conduction (D), d'une deuxième résistance (R2) et d'un circuit de dérivation (C2, R3), à la ligne de signal de rythme (TL), de sorte à obtenir, à la sortie de l'intégrateur (C1, OP) et en fonction du rapport de résistance des deux résistances (R1, R2), pour des fréquences de rythme relativement basses, une tension de sortie négative et pour des fréquences de rythme relativement élevées, une tension de sortie positive.

6. Récepteur de signalisation selon la revendication 4 ou 5, caractérisé en ce que une sortie de signal du filtre passe-bande variable (BP) est reliée à un deuxième redresseur (G2) et en ce que le deuxième redresseur (G2) est relié à la matrice de commutateurs analogiques (AS) du commutateur de largeur de bande (BU) de sorte que, en fonction des fréquences de signal de rythme détectées par le détecteur de fréquence de signal de rythme (DT), il est possible de réguler les constances de temps correspondantes du deuxième redresseur (G2).

7. Récepteur de signalisation selon l'une des revendications précédentes, caractérisé en ce que le filtre passe-haut (HP) et le filtre passe-bande (BP) sont réalisés sous forme de filtre à capacités commutées.
